# EUROPEAN PATENT SPECIFICATION

(11) **EP 3 955 159 B1**
(45) Date of publication and mention of the grant of the patent: **06.11.2024**
(21) Application number: 21185774.3
(22) Date of filing: 15.07.2021
(51) Int. Cl.: G06V 40/16

(54) **ANTI-FACE-RECOGNITION SYSTEM AND ANTI-FACE-RECOGNITION METHOD AND VEHICLE**
ANTI-GESICHTSERKENNUNGSSYSTEM UND ANTI-GESICHTSERKENNUNGSVERFAHREN UND FAHRZEUG
SYSTÈME ET PROCÉDÉ ANTI-RECONNAISSANCE FACIALE ET VÉHICULE

(30) Priority: 12.08.2020 CN 202010804718
(43) Date of publication of application: 16.02.2022
(73) Proprietor: Bayerische Motoren Werke Aktiengesellschaft, 80809 München (DE)
(72) Inventor: Wang, Chris, Shanghai 201101 (CN); Zhang, Zhe, Shanghai 200331 (CN)

(56) References cited:
- WO-A1-2019/058492
- US-A1- 2015 042 477
- US-A1- 2019 327 462
- NGUYEN DINH-LUAN ET AL: "Adversarial Light Projection Attacks on Face Recognition Systems: A Feasibility Study", 2020 IEEE/CVF CONFERENCE ON COMPUTER VISION AND PATTERN RECOGNITION WORKSHOPS (CVPRW), IEEE, 14 June 2020 (2020-06-14), pages 3548 - 3556, XP033798901, DOI: 10.1109/CVPRW50498.2020.00415

## Description

### TECHNICAL FIELD

The present disclosure relates to the field of anti-face-recognition, and in particular, to an anti-face-recognition system for vehicles, an anti-face-recognition method and a vehicle having the anti-face-recognition system.

### BACKGROUND ART

The face-recognition technology is widely applied in attendance, security, criminal investigation, payment, life services and other fields, wherein cameras are used to collect a facial image of a person and the identity of the person is determined by recognizing facial features of the person in the facial image.

With the development of the information age, requirements on security of personal information are getting higher and higher, and people are beginning to pay attention to the security of personal information. In daily life, the face-recognition technology may lead to a leakage of personal information and personal privacy, and may create a threat to personal safety. With the popularization of transportation means, especially private cars, requirements of preventing vehicle users from sneak shots by roadside cameras during driving are also getting more and more attention. However, there is currently no anti-face-recognition system for vehicle users for effectively protecting personal privacy and personal safety. NGUYEN DINH-LUAN ET AL: "Adversarial Light Projection Attacks on Face Recognition Systems: A Feasibility Study",2020 IEEE/CVF CONFERENCE ON COMPUTER VISION AND PATTERN RECOGNITION WORKSHOPS (CVPRW), IEEE investigates the feasibility of conducting real-time physical attacks on face recognition systems using adversarial light projections.

US 2019/327462 A1 (COHEN NOY [IL] ET AL) relates to preventing eye damage from structured light infra-red/near infra-red (IR/NIR) projector system.

### CONTENT OF THE DISCLOSURE

Therefore, one object of the present disclosure is to provide an anti-face-recognition system, an anti-face-recognition method and related vehicles that may improve anti-face-recognition for vehicle users.

According to a first aspect of the present disclosure, an anti-face-recognition system for vehicles is provided, the anti-face-recognition system for vehicles configured for reducing a risk of vehicle users being recognized by a camera in an external environment of their own facial data, the anti-face-recognition system comprises: a first projection device which is configured to project interfering electromagnetic waves toward a human face, the interfering electromagnetic waves having an interference effect on the recognition of the human face; an eyeball-tracking device which is configured to detect an eyeball sight direction; and a control device which is communicatively connected to the eyeball-tracking device and is configured to acquire the eyeball sight direction from the eyeball-tracking device, wherein the control device is communicatively connected to the first projection device and is configured to adjust the projection of the interfering electromagnetic waves toward the human face according to the acquired eyeball sight direction, wherein the first projection device is configured to project rotatable and/ or movable interfering electromagnetic waves toward the human face, and the control device is configured to adjust the projection direction of the interfering electromagnetic waves toward the human face according to the acquired eyeball sight direction so as to cause the interfering electromagnetic waves to rotate and/or move, so that a central axis of the electromagnetic waves is moved further away from eyeball areas, thereby reducing the amount of electromagnetic waves directly projected into the eyeballs.

In some embodiments, the first projection device is configured to project interfering electromagnetic waves with variable intensity toward the human face, and the control device is configured to at least partially reduce the projection intensity of the interfering electromagnetic waves onto the eyeball area according to the acquired eyeball sight direction.

In some embodiments, the interfering electromagnetic waves are configured to apply noise, particularly random noise, to the human face, preferably, the noise is configured as an image noise of a face-recognition image.

In some embodiments, the first projection device is arranged ahead of the human face, preferably, the first projection device is arranged on the steering wheel and/or the dashboard.

In some embodiments, the eyeball-tracking device is configured as a vehicle-mounted camera.

In some embodiments, the vehicle-mounted camera is further configured to detect the fatigue state of the human face, and the control device is configured to analyze the fatigue state and adjust the projection of the interfering electromagnetic waves toward the human face according to the analyzed fatigue state.

In some embodiments, when the control device recognizes that the human face is in a fatigue state, the control device is configured to output an alert indication so as to enhance the projection intensity of the interfering electromagnetic wave toward the human face, especially the projection on the eyeballs.

In some embodiments, the anti-face-recognition system further includes a second projection device which is configured to generate a covering projection surface so as to at least partially cover the human face for obstructing a face-recognition.

In some embodiments, the second projection device is configured as a holographic projection module which is configured to generate a holographic projection, such as a three-dimensional holographic projection. In some embodiments, the second projection device may include a first projector and a second projector which are installed on the roof of the vehicle and configured to generate a three-dimensional projection surface.

In some embodiments, the anti-face-recognition system further includes a vehicle positioning module for providing the current position of the vehicle and a traffic information module for providing the position of a municipal camera, such as the position of a traffic camera.

In some embodiments, the control device is configured to control the projection of the interfering electromagnetic waves toward the human face according to the current position of the vehicle and the position of the municipal camera.

In some embodiments, the control device is configured to control the operation of the first projection device according to related regulations, wherein if the related regulations do not allow an anti-recognition process against a municipal camera, then when the current position of the vehicle is within a predetermined range of the position of the municipal camera, the control device is configured to output a first suspending instruction for suspending the first projection device from projecting the interfering electromagnetic waves toward the human face; and when the current position of the vehicle is out of the predetermined range of the position of the municipal camera, the control device is configured to output a first activation instruction for activating the first projection device to project the interfering electromagnetic waves toward the human face. If the related regulations do not prohibit an anti-recognition process against a municipal camera, the first projection device may be automatically activated to project the interfering electromagnetic waves toward the human face. Therefore, the first projection device may be selectively activated or deactivated when the vehicle is positioned within a range of the position of the municipal camera.

In some embodiments, when the current position of the vehicle is out of the predetermined range of the position of the municipal camera, the control device is configured to output a first activation instruction for activating the first projection device to project the interfering electromagnetic waves toward the human face.

In some embodiments, the anti-face-recognition system further includes a vehicle positioning module for providing the current position of the vehicle and a traffic information module for providing the position of a municipal camera, wherein the control device is configured to control the generation of the covering projection surface according to the current position of the vehicle and the position of the municipal camera.

In some embodiments, the control device is configured to control the operation of the second projection device according to related regulations, wherein if the related regulations do not allow an anti-recognition process against a municipal camera, then when the current position of the vehicle is within a predetermined range of the position of the municipal camera, the control device is configured to output a second suspending instruction for suspending the second projection device from generating the covering projection surface. In some embodiments, when the current position of the vehicle is out of the predetermined range of the position of the municipal camera, the control device is configured to output a second activation instruction for activating the second projection device to generate the covering projection surface. If the related regulations do not prohibit an anti-recognition process against a municipal camera, the second projection device may be automatically activated to generate the covering projection surface. Therefore, the second projection device may be selectively activated or deactivated when the vehicle is positioned within a range of the position of the municipal camera.

According to a second aspect of the present disclosure, an anti-face-recognition method for vehicles is provided. The anti-face-recognition method is configured for reducing a risk of vehicle users being recognized by a camera in an external environment of their own facial data, the anti-face-recognition method comprises: projecting interfering electromagnetic waves toward a human face, the interfering electromagnetic waves having an interference effect on the recognition of the human face; acquiring an eyeball sight direction; adjusting the projection of the interfering electromagnetic waves toward the human face according to the acquired eyeball sight direction; and adjusting the projection direction of the interfering electromagnetic waves toward the human face according to the acquired eyeball sight direction so as to cause the interfering electromagnetic waves to rotate and/or move, so that a central axis of the electromagnetic waves is moved further away from eyeball areas, thereby reducing the amount of electromagnetic waves directly projected into the eyeballs.

In some embodiments, the anti-face-recognition method further includes:
detecting the fatigue state of the human face; and
adjusting the projection of the interfering electromagnetic waves toward the human face according to the fatigue state, and preferably, when recognizing the fatigue state of the human face, enhancing the projection intensity of the interfering electromagnetic wave toward the human face, especially the projection on the eyeballs.

In some embodiments, the anti-face-recognition method further includes: generating a covering projection surface, preferably a holographic projection surface, so as to at least partially cover the human face for obstructing a face-recognition.

In some embodiments, the anti-face-recognition method further includes:
acquiring the current position of the vehicle;
acquiring the position of a municipal camera, such as a traffic camera;
controlling the projection of the interfering electromagnetic waves toward the human face according to the current position of the vehicle and the position of the municipal camera, wherein preferably related regulations are ascertained, and if the related regulations do not allow an anti-recognition process against a municipal camera, a distance between the current position of the vehicle and the position of the municipal camera is determined, when the current position of the vehicle is in a predetermined range of the position of the municipal camera, the first projection device is suspended from projecting the interfering electromagnetic waves toward the human face, and when the current position of the vehicle is out of the predetermined range of the position of the municipal camera, the first projection device is activated to project the interfering electromagnetic waves toward the human face.

In some embodiments, the anti-face-recognition method further includes:
acquiring the current position of the vehicle;
acquiring the position of a municipal camera, such as a traffic camera;
controlling the generation of the covering projection surface according to the current position of the vehicle and the position of the municipal camera, wherein preferably related regulations are ascertained, and if the related regulations do not allow an anti-recognition process against a municipal camera, a distance between the current position of the vehicle and the position of the municipal camera is determined, when the current position of the vehicle is within a predetermined range of the position of the municipal camera, the second projection device is suspended from generating the covering projection surface, and when the current position of the vehicle is out of the predetermined range of the position of the municipal camera, the second projection device is activated to generate the covering projection surface.

According to a third aspect of the present disclosure, a vehicle is provided. The vehicle includes the anti-face-recognition system according to any one of the above embodiments.

### BRIEF DESCRIPTION OF THE DRAWINGS

The following describes some examples of devices and/or methods with reference to the drawings, and in the drawings:
FIG. 1 is a partial schematic diagram of a vehicle according to some embodiments of the present disclosure;
FIG. 2 is a schematic block diagram of an anti-face-recognition system according to some embodiments of the present disclosure;
FIG. 3 is a flowchart of an anti-face-recognition method according to some embodiments of the present disclosure.

### EMBODIMENTS

Embodiments of the present disclosure will be described below with reference to the drawings, in which several embodiments of the present disclosure are shown. It should be understood, however, that the present disclosure may be implemented in many different ways, and is not limited to the example embodiments described below. In fact, the embodiments described hereinafter are intended to make the present disclosure to be more complete and to adequately explain the scope of the present disclosure to a person skilled in the art. It should also be understood that, the embodiments disclosed herein can be combined in various ways to provide many additional embodiments.

It should be understood that, the wording in the present disclosure is only used for describing particular embodiments and is not intended to limit the present disclosure. All the terms used in the specification (including technical and scientific terms) have the meanings as normally understood by a person skilled in the art, unless otherwise defined. For the sake of conciseness and/or clarity, well-known functions or constructions may not be described in detail.

The term "A or B" used through the present disclosure refers to "A and B" and "A or B" rather than meaning that A and B are exclusive, unless otherwise specified.

The term "exemplary", as used herein, means "serving as an example, instance, or illustration". Any implementation described herein as exemplary is not necessarily to be construed as preferred or advantageous over other implementations. Furthermore, there is no intention for the present disclosure to be bound by any expressed or implied theory presented in the part of technical field, the background art, the content of the disclosure or the embodiments.

Herein, certain terminology, such as the terms "first", "second" and the like, may also be used in the following specification for the purpose of reference only, and the terms "first", "second" may refer to multiple "first", "second". For example, the terms "first", "second" and other such numerical terms referring to structures or elements do not imply a sequence or order unless clearly indicated by the context.

Further, it should be noted that, the terms "comprise", "include", "have" and any other variants, as used herein, specify the presence of stated features, unity, steps, operations, elements, and/or components, but do not preclude the presence or addition of one or more other features, unities, steps, operations, elements and/or components, and/or groups thereof. Unless otherwise defined, all terms (including technical terms and scientific terms) are used herein according to their ordinary meanings in the field to which examples belong.

It should be noted that the order of the steps of the methods in the present disclosure may be set flexibly, and numbers marking the steps are only for convenience of specification and have no limiting effect.

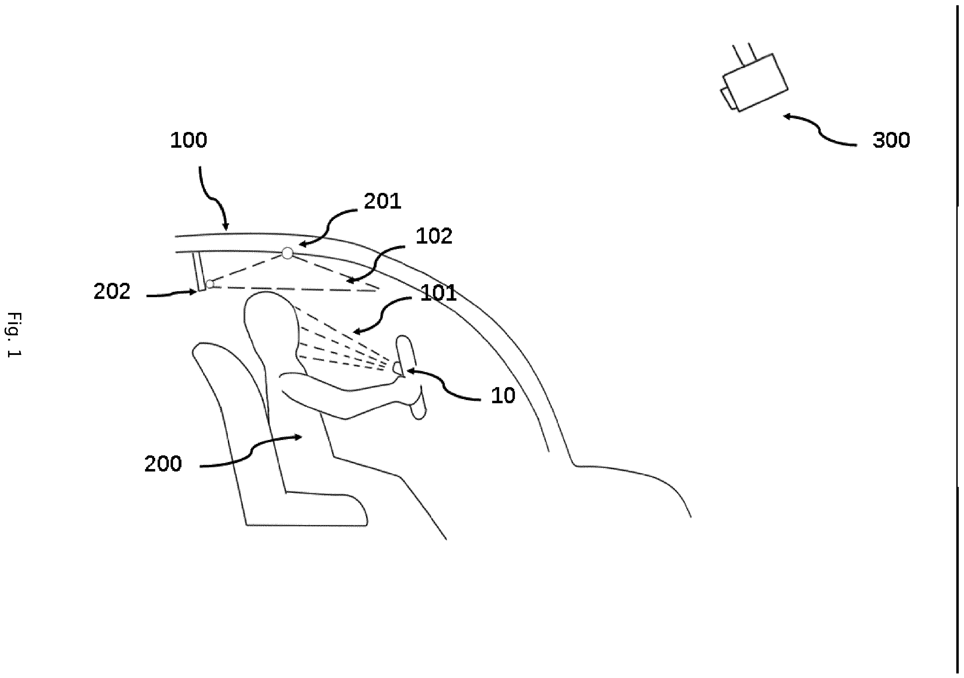

Next, various aspects according to the present disclosure are explained in detail with reference to FIG. 1 to FIG. 3.

FIG. 1 is a partial schematic diagram of a vehicle 100 according to some embodiments of the present disclosure. As shown in FIG. 1, a vehicle user 200 (here, a vehicle driver) is inside the vehicle. The vehicle 100 herein may be a movable transportation means, for example, a car, a passenger coach, a truck, a wagon, a train, a ship, a motorcycle, a tricycle, a bicycle or other movable transportation means. It should be understood that the vehicle user may be any person in the vehicle, e.g., a passenger or a driver.

A camera 300 is schematically shown outside the vehicle, and the camera may capture an image of the vehicle user inside the vehicle, for example, the camera may perform a face-recognition process on the vehicle user. These cameras may be so-called municipal cameras, which may include industrial and commercial cameras, traffic cameras, public security cameras, environmental cameras, sanitary cameras, and infrastructure cameras. Most of these municipal cameras are officially authorized to recognize people's faces in order to implement city management. However, there may also be cameras on a road used to carry out sneak shots to acquire face-recognition data for selling, which leads to a leakage of personal information and personal privacy. For this reason, the present disclosure provides a vehicle-mounted anti-face-recognition system, which effectively reduces a risk of vehicle users being recognized by a camera in an external environment of their own facial data, thereby reducing a risk of leakage of personal information and personal privacy.

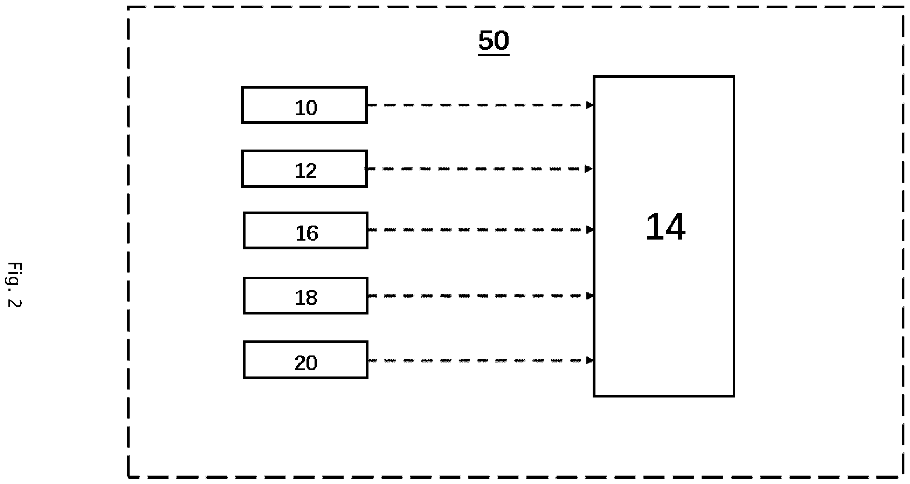

An anti-face-recognition system 50 according to some embodiments of the present disclosure is described in conjunction with FIG. 1 and FIG. 2. The anti-face-recognition system 50 includes a first projection device 10 which may be configured as an electromagnetic wave radiator and be configured to project interfering electromagnetic waves 101 toward a human face. The interfering electromagnetic waves have an interference effect on recognizing the human face. The interfering electromagnetic waves 101 may be projected directedly onto the human face, or may be projected on an area in front of the human face. The interfering electromagnetic waves 101 may be configured to apply noise, particularly random noise, to the human face. In some cases, these interfering electromagnetic waves 101 may be configured as image noise in a recognition image of the human face. In this case, these interfering electromagnetic waves may be visible light noise, for example, and the first projection device 10 may project random visible light noise points to the human face. These visible light noise points may be not easy to perceive from a perspective of human perception, while it may be interfering in terms of face-recognition or it may interfere face-recognition. In this way, pixel values of a certain number of pixels in a face image may be effectively changed, thereby reducing a success rate of face-recognition. In some embodiments, these interfering electromagnetic waves may be strong light, infrared light, etc., for example. By using strong light or infrared light to increase an exposure amount, the success rate of face-recognition may also be reduced. In some embodiments, based on a diversity of face-recognition algorithms, the interfering electromagnetic waves may cause distortion in a structure or contour of a three-dimensional image of a human face, thereby reducing the success rate of face-recognition. It should be understood that generation means of interfering electromagnetic waves (such as imaging means and applied or related algorithms) may be upgraded through a vehicle network to counter upgraded face-recognition algorithms or multiple different face-recognition algorithms. In some cases, algorithm switching may be performed for different types of cameras, such as high-definition cameras or cameras with special functions, for example, the algorithm switching may be performed based on location information.

In order to facilitate projecting the interfering electromagnetic waves onto the face of the vehicle user or on the area in front of the face, the first projection device 10 may be arranged in front of the face inside the vehicle, so that the interfering electromagnetic waves may be directly projected onto a face area or an area in front of the face. As shown in FIG. 1, the first projection device 10 may be arranged on the steering wheel of the vehicle, so that the first projection device 10 may project electromagnetic waves directly toward the driver's face. In other embodiments, the first projection device 10 may also be arranged on the dashboard or on the roof of the vehicle. It is also possible that interfering electromagnetic waves may be indirectly projected onto the face area, for example, be reflected onto the face area. It is also possible that multiple first projection devices are arranged at different positions in the vehicle, and these first projection devices may project the electromagnetic waves onto the face for different face areas and/or for different recognition algorithms and/or by different interference manners/modes, respectively. Therefore, a location of the first projection device inside the vehicle may be diverse and flexible, and is not limited to the current embodiment.

Nevertheless, it is inevitable that the interfering electromagnetic waves may enter into eyeballs of the vehicle user, thereby affecting experience of the vehicle user. When an amount of the electromagnetic waves projected into the eyeball exceeds a certain value, the vehicle user may be subjected to dazzling, trance, and even eyeball damage. Especially for drivers, receiving excessively projected interfering electromagnetic waves may affect driving safety, thereby causing hidden traffic safety danger.

For at least partially reducing the amount of the interfering electromagnetic waves projected into the eyeballs, the anti-face-recognition system 50 includes an eyeball-tracking device 12 which is configured to track movement of an eyeball or to detect an eyeball sight direction. In addition, the anti-face-recognition system 50 includes a control device 14 which is communicatively connected to the eyeball-tracking device 12 and is configured to acquire the eyeball sight direction from the eyeball-tracking device. The control device 14 controls a projection operation of the first projection device according to the acquired eyeball sight direction, for example, the control device 14 adjusts the projection of the interfering electromagnetic waves toward the human face.

Additionally the first projection device 10 is configured to project rotatable and/or movable interfering electromagnetic waves 101 toward the human face. Therefore, the control device 14 adjusts the projection direction of the interfering electromagnetic waves toward the human face according to the acquired eyeball sight direction so as to avoid projecting onto the eyeball at least partially. That is to say, the control device 14 outputs an adjustment command to cause the interfering electromagnetic waves to rotate and/or move, so that a central axis of the electromagnetic waves is moved further away from eyeball areas, thereby reducing the amount of electromagnetic waves directly projected into the eyeballs.

Additionally or alternatively, the first projection device 10 is configured to project interfering electromagnetic waves 101 with variable intensity toward the human face, and the control device 14 is configured to at least partially reduce the projection intensity of the interfering electromagnetic waves onto the eyeball area according to the acquired eyeball sight direction. That is to say, the control device 14 may output an adjustment command to at least partially reduce the radiation intensity of the interfering electromagnetic waves, thereby reducing the intensity of the electromagnetic waves directly projected into the eyeballs.

Additionally or alternatively, the eyeball-tracking device 12 may be configured as a vehicle-mounted camera. Preferably, the vehicle-mounted camera may be further configured to detect the fatigue state of the human face, and thus the control device 14 may be configured to analyze the fatigue state and adjust the projection of the interfering electromagnetic waves toward the human face according to the analyzed fatigue state. Preferably, when recognizing that the human face is in a fatigue state, the control device 14 is configured to output an alert indication so as to enhance the projection of the interfering electromagnetic waves 101 toward the human face, especially the projection on the eyeballs. Therefore, the anti-face-recognition system 50 additionally has a function of improving driving safety.

Additionally or alternatively, the anti-face-recognition system 50 may advantageously include a second projection device 20 which is configured to generate a covering projection surface 102 so as to at least partially cover the human face for obstructing a face-recognition. As shown in FIG. 1, the second projection device 20 may be installed on the roof of the vehicle, so as to generate at least one covering projection surface 102 over the human face for avoiding sneak shots by outside cameras. In the present embodiment, the second projection device 20 may include a first projector 201 and a second projector 202 and generate a three-dimensional projection surface by the two projectors. The covering projection surface may cause an outside camera to be unable to accurately capture an image of the human face, thereby reducing the success rate of the face-recognition thereof.

According to the embodiment of the present disclosure, the first projection device 10 and the second projection device 20 may be respectively responsible for different face areas, so as to reduce interference to eyeballs as much as possible. Therefore, by combining the projections of the first projection device 10 and the second projection device 20, an effect of anti-face-recognition may be improved.

According to the present disclosure, the anti-face-recognition system 50 may be activated when the vehicle is launched. Of course, the anti-face-recognition system may also be activated manually or automatically according to result of environmental detection. However, as mentioned above, a camera targeted by the present disclosure are not municipal cameras used for city management. Therefore, it is advantageous to avoid "accidentally shielding" some municipal cameras as much as possible.

In this respect, the anti-face-recognition system 50 according to some embodiments of the present disclosure may further include a vehicle positioning module 16 and a traffic information module 18. The vehicle positioning module 16 may be any appropriate positioning system, such as GPS positioning system, Beidou positioning system, and so on. The vehicle position module 16 may provide a current position of the vehicle. The traffic information module 18 may be a map module (e.g., a high-precision map) or a navigation module, and various data are stored in the map module or the navigation module. In addition, the traffic information module 18 may be a storage device in which traffic data transmitted from a remote server are stored. The traffic information module may store data related to positions of various municipal cameras, such as a position of a traffic camera.

The control device 14 may acquire the current position of the vehicle and the position of the municipal camera from the vehicle positioning module and the traffic information module, and control the projection of the interfering electromagnetic waves toward the human face according to the acquired current position of the vehicle and the position of the municipal camera. When related regulations do not allow an anti-recognition process against a specific municipal camera, for example, when the current position of the vehicle is within a predetermined range of the position of the municipal camera, the control device is configured to output a first suspending instruction for suspending the first projection device from projecting the interfering electromagnetic waves toward the human face; and when the current position of the vehicle is out of the predetermined range of the position of the municipal camera, the control device is configured to output a first activation instruction for activating the first projection device to project the interfering electromagnetic waves toward the human face.

Additionally or alternatively, the control device 14 may further be configured to control the generation of the covering projection surface according to the current position of the vehicle and the position of the municipal camera. For example, when the current position of the vehicle is within a predetermined range of the position of the municipal camera, the control device is configured to output a second suspending instruction for suspending the second projection device from generating the covering projection surface; and when the current position of the vehicle is out of the predetermined range of the position of the municipal camera, the control device is configured to output a second activation instruction for activating the second projection device to generate the covering projection surface.

It should be understood that the control device may be configured as any device with data processing and analysis functions including a processor. For example, the control device may be configured as one or more processors, or the control device may be configured as a computer, a server or even other smart handheld devices. The processor may be connected to a storage module via an interconnection bus. The storage module may include a main memory, a read-only memory, and mass storage devices, such as various disk drives, tape drives, and so on. The "processor" is not limited to CPU or GPU, but may include a digital signal processor (DSP) hardware, a network processor, an application specific integrated circuit (ASIC), and a field programmable gate array (FPGA). The storage device may be a read-only memory (ROM), a random access memory (RAM), and a non-volatile memory for storing software. Other conventional and/or customized hardware may also be included.

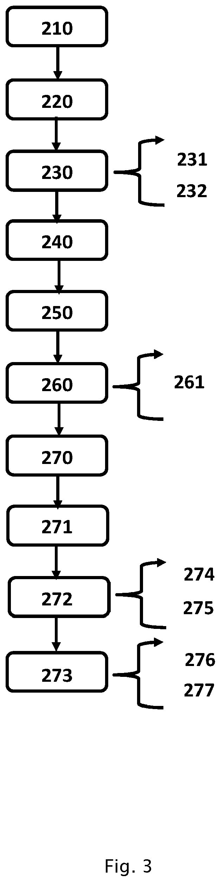

Next, referring to FIG. 3, a flowchart of an anti-face-recognition method according to some embodiments of the present disclosure is described in detail.

As shown in FIG. 3, the anti-face-recognition method may include:
step 210, interfering electromagnetic waves are projected toward a human face (namely a human face of the user inside the vehicle), the interfering electromagnetic waves having an interference effect on the recognition of the human face;
step 220, an eyeball sight direction is acquired; and
step 230, the projection of the interfering electromagnetic waves toward the human face is adjusted according to the acquired eyeball sight direction.

In the step 210, the interfering electromagnetic waves may be projected into human face areas by means of the above-mentioned first projection device. In the step 220, the eyeball-tracking device (for example, the vehicle-mounted camera) may be used to detect the eyeball sigh direction. In the step 230, the projection of the interfering electromagnetic waves may be controlled by means of the above-mentioned control device.

Preferably, the step 230 may include:
step 231, the projection direction of the interfering electromagnetic waves toward the human face is adjusted according to the acquired eyeball sight direction so as to avoid projecting onto the eyeball at least partially; and/or
step 232, the projection intensity of the interfering electromagnetic waves on the eyeball area is at least partially reduced according to the acquired eyeball sight direction.

In the step 231, the interfering electromagnetic waves may be configured to be rotatable and/or movable, so that a projection direction may be adjusted by rotating and/or moving the electromagnetic waves, in this way, a central axis of the electromagnetic waves is moved further away from eyeball areas, thereby reducing the amount of electromagnetic waves directly projected into the eyeballs.

In the step 232, the interfering electromagnetic waves may be configured with variable projection intensity, so that the radiation intensity of the interfering electromagnetic waves may be reduced as required, thereby reducing the intensity of the electromagnetic waves directly projected into the eyeballs.

Additionally or alternatively, the anti-face-recognition method further includes:
step 250, the fatigue state of the human face is detected; and
step 260, the projection of the interfering electromagnetic waves toward the human face is adjusted according to the fatigue state of the human face.

Preferably, the step 260 further includes: step 261, when recognizing the fatigue state of the human face, the projection (namely the projection intensity) of the interfering electromagnetic waves toward the human face, especially the projection on the eyeball, is enhanced.

Additionally or alternatively, the anti-face-recognition method further includes:
step 240, a covering projection surface, preferably a holographic projection surface, is generated, so as to at least partially cover the human face for obstructing a face-recognition.

In the step 240, the above-mentioned second projection device may be used to project the covering projection surface over the human face, thereby at least partially shielding shots of an external camera. According to the present disclosure, the first projection device and the second projection device may be respectively responsible for different face areas, so as to reduce interference to eyeballs as much as possible. Therefore, by combining projections of the first projection device and the second projection device, the effect of anti-face-recognition may be improved.

Additionally or alternatively, the anti-face-recognition method further includes:
step 270, the current position of the vehicle is acquired;
step 271, the position of a municipal camera, such as a traffic camera, is acquired;
step 272, the projection of the interfering electromagnetic waves toward the human face is controlled according to the current position of the vehicle and the position of the municipal camera.

Additionally or alternatively, the anti-face-recognition method further includes:
step 273, the generation of the covering projection surface is controlled according to the current position of the vehicle and the position of the municipal camera.

Preferably, the step 272 further includes:
step 274, a distance between the current position of the vehicle and the position of the municipal camera is determined, when the current position of the vehicle is in a predetermined range of the position of the municipal camera, the first projection device is suspended from projecting the interfering electromagnetic waves toward the human face; and
step 275, when the current position of the vehicle is out of the predetermined range of the position of the municipal camera, the first projection device is activated to project the interfering electromagnetic waves toward the human face.

Preferably, the step 273 further includes:
step 276, the distance between the current position of the vehicle and the position of the municipal camera is determined, when the current position of the vehicle is within a predetermined range of the position of the municipal camera, the second projection device is suspended from generating the covering projection surface; and
step 277, when the current position of the vehicle is out of the predetermined range of the position of the municipal camera, the second projection device is activated to generate the covering projection surface.

## Claims

1. An anti-face-recognition system for vehicles, the anti-face-recognition system for vehicles configured for reducing a risk of vehicle users being recognized by a camera in an external environment of their own facial data, the anti-face-recognition system comprises:
a first projection device which is configured to project interfering electromagnetic waves toward a human face, the interfering electromagnetic waves having an interference effect on the recognition of the human face;
an eyeball-tracking device which is configured to detect an eyeball sight direction; and
a control device which is communicatively connected to the eyeball-tracking device and is configured to acquire the eyeball sight direction from the eyeball-tracking device, wherein the control device is communicatively connected to the first projection device and is configured to adjust the projection of the interfering electromagnetic waves toward the human face according to the acquired eyeball sight direction, wherein the first projection device is configured to project rotatable and/or movable interfering electromagnetic waves toward the human face, and the control device is configured to adjust the projection direction of the interfering electromagnetic waves toward the human face according to the acquired eyeball sight direction so as to cause the interfering electromagnetic waves to rotate and/or move, so that a central axis of the electromagnetic waves is moved further away from eyeball areas, thereby reducing the amount of electromagnetic waves directly projected into the eyeballs.

2. The anti-face-recognition system according to claim 1, **characterized in that**
the first projection device is configured to project interfering electromagnetic waves with variable intensity toward the human face, and the control device is configured to at least partially reduce the projection intensity of the interfering electromagnetic waves onto the eyeball area according to the acquired eyeball sight direction.

3. The anti-face-recognition system according to claim 1 or 2, **characterized in that** the interfering electromagnetic waves are configured to apply noise, particularly random noise, to the human face, preferably, the noise is configured as an image noise to a face-recognition image.

4. The anti-face-recognition system according to claim 1 or 2, **characterized in that** the first projection device is arranged in front of the human face, preferably, the first projection device is arranged on the steering wheel and/or the dashboard.

5. The anti-face-recognition system according to claim 1 or 2, **characterized in that** the eyeball-tracking device is configured as a vehicle-mounted camera,
preferably, the vehicle-mounted camera is further configured to detect the fatigue state of the human face, and the control device is configured to analyze the fatigue state and adjust the projection of the interfering electromagnetic waves toward the human face according to the analyzed fatigue state, and
preferably, when the control device recognizes that the human face is in a fatigue state, the control device is configured to output an alert indication so as to enhance the projection of the interfering electromagnetic wave toward the human face, especially the projection on the eyeballs.

6. The anti-face-recognition system according to claim 1 or 2, **characterized in that** the anti-face-recognition system further comprises a second projection device which is configured to generate a covering projection surface so as to at least partially cover the human face for obstructing a face-recognition,
preferably, the second projection device is configured as a holographic projection module which is configured to generate a holographic projection, and
preferably, the second projection device includes a first projector and a second projector which are installed on the roof of the vehicle and configured to generate a three-dimensional projection surface.

7. The anti-face-recognition system according to claim 1 or 2, **characterized in that** the anti-face-recognition system further comprises a vehicle positioning module for providing the current position of the vehicle and a traffic information module for providing the position of a municipal camera, such as the position of a traffic camera,
preferably, the control device is configured to control the projection of the interfering electromagnetic waves toward the human face according to the current position of the vehicle and the position of the municipal camera;
preferably, the control device is configured to control the operation of the first projection device according to related regulations, wherein
if the related regulations do not allow an anti-recognition process against a municipal camera, then when the current position of the vehicle is within a predetermined range of the position of the municipal camera, the control device is configured to output a first suspending instruction for suspending the first projection device from projecting the interfering electromagnetic waves toward
when the current position of the vehicle is out of the predetermined range of the position of the municipal camera, the control device is configured to output a first activation instruction for activating the first projection device to project the interfering electromagnetic waves toward the human face.

8. The anti-face-recognition system according to claim 6, **characterized in that** the anti-face-recognition system further comprises a vehicle positioning module for providing the current position of the vehicle and a traffic information module for providing the position of a municipal camera, wherein the control device is configured to control the generation of the covering projection surface according to the current position of the vehicle and the position of the municipal camera,
preferably, the control device is configured to control the operation of the second projection device according to related regulations, wherein if the related regulations do not allow an anti-recognition process against a municipal camera, then when the current position of the vehicle is within a predetermined range of the position of the municipal camera, the control device is configured to output a second suspending instruction for suspending the second projection device from generating the covering projection surface, and
when the current position of the vehicle is out of the predetermined range of the position of the municipal camera, the control device is configured to output a second activation instruction for activating the second projection device to generate the covering projection surface.

9. An anti-face-recognition method for vehicles, the anti-face-recognition method for vehicles configured for reducing a risk of vehicle users being recognized by a camera in an external environment of their own facial data, the anti-face-recognition method comprises:
projecting interfering electromagnetic waves toward a human face, the interfering electromagnetic waves having an interference effect on the recognition of the human face;
acquiring an eyeball sight direction;
adjusting the projection of the interfering electromagnetic waves toward the human face according to the acquired eyeball sight direction; and
adjusting the projection direction of the interfering electromagnetic waves toward the human face according to the acquired eyeball sight direction so as to cause the interfering electromagnetic waves to rotate and/or move, so that a central axis of the electromagnetic waves is moved further away from eyeball areas, thereby reducing the amount of electromagnetic waves directly projected into the eyeballs.

10. The anti-face-recognition method according to claim 9, **characterized in that** adjusting the projection of the interfering electromagnetic waves toward the human face according to the acquired eyeball sight direction comprises:
at least partially reducing the projection intensity of the interfering electromagnetic waves on the eyeball area according to the acquired eyeball sight direction.

11. The anti-face-recognition method according to claim 9 or 10, **characterized in that** the anti-face-recognition method further comprises:
detecting the fatigue state of the human face; and
adjusting the projection of the interfering electromagnetic waves toward the human face according to the fatigue state, and preferably, when recognizing the fatigue state of the human face, enhancing the projection intensity of the interfering electromagnetic wave toward the human face, especially the projection on the eyeballs.

12. The anti-face-recognition method according to claim 9 or 10, **characterized in that** the anti-face-recognition method further comprises:
generating a covering projection surface, preferably a holographic projection surface, so as to at least partially cover the human face for obstructing a face-recognition.

13. The anti-face-recognition method according to claim 9 or 10, **characterized in that** the anti-face-recognition method further comprises:
acquiring the current position of the vehicle;
acquiring the position of a municipal camera, such as a traffic camera;
controlling the projection of the interfering electromagnetic waves toward the human face according to the current position of the vehicle and the position of the municipal camera, wherein preferably related regulations are ascertained, and if the related regulations do not allow an anti-recognition process against a municipal camera, the distance between the current position of the vehicle and the position of the municipal camera is determined, when the current position of the vehicle is in a predetermined range of the position of the municipal camera, the first projection device is suspended from projecting the interfering electromagnetic waves toward the human face, and when the current position of the vehicle is out of the predetermined range of the position of the municipal camera, the first projection device is activated to project the interfering electromagnetic waves toward the human face.

14. The anti-face-recognition method according to claim 12, **characterized in that** the anti-face-recognition method further comprises:
acquiring the current position of the vehicle;
acquiring the position of a municipal camera, such as a traffic camera;
controlling the generation of the covering projection surface according to the current position of the vehicle and the position of the municipal camera, wherein preferably related regulations are ascertained, and if the related regulations do not allow an anti-recognition process against a municipal camera, the distance between the current position of the vehicle and the position of the municipal camera is determined, when the current position of the vehicle is within a predetermined range of the position of the municipal camera, the second projection device is suspended from generating the covering projection surface, and when the current position of the vehicle is out of the predetermined range of the position of the municipal camera, the second projection device is activated to generate the covering projection surface.

15. A vehicle, which comprises the anti-face-recognition system according to any one of claims 1 to 8.

## Patentansprüche

1. Anti-Gesichtserkennungssystem für Fahrzeuge, wobei das Anti-Gesichtserkennungssystem für Fahrzeuge dazu ausgelegt ist, das Risiko von Fahrzeugbenutzern zu verringern, durch eine Kamera in einer Außenumgebung an ihren Gesichtsdaten erkannt werden, wobei das Anti-Gesichtserkennungssystem umfasst:
eine erste Projektionsvorrichtung, die dazu ausgelegt ist, störende elektromagnetische Wellen auf ein menschliches Gesicht zu projizieren, wobei die störenden elektromagnetischen Wellen einen Störeffekt auf die Erkennung des menschlichen Gesichts aufweisen;
eine Augapfelverfolgungsvorrichtung, die dazu ausgelegt ist, eine Augapfelblickrichtung zu erfassen; und
eine Steuervorrichtung, die kommunikativ mit der Augapfelverfolgungsvorrichtung verbunden und dazu ausgelegt ist, die Augapfelblickrichtung aus der Augapfelverfolgungsvorrichtung zu erfassen, wobei die Steuervorrichtung kommunikativ mit der ersten Projektionsvorrichtung verbunden und dazu ausgelegt ist, die Projektion der störenden elektromagnetischen Wellen auf das menschliche Gesicht gemäß der erfassten Augapfelblickrichtung anzupassen, wobei die erste Projektionsvorrichtung dazu ausgelegt ist, drehbare und/oder bewegbare störende elektromagnetische Wellen auf das menschliche Gesicht zu projizieren, und die Steuervorrichtung dazu ausgelegt ist, die Projektionsrichtung der störenden elektromagnetischen Wellen auf das menschliche Gesicht gemäß der erfassten Augapfelblickrichtung anzupassen, um zu bewirken, dass sich die störenden elektromagnetischen Wellen drehen und/oder bewegen, sodass eine Mittelachse der elektromagnetischen Wellen weiter von den Augapfelbereichen weg bewegt wird, wodurch die Menge der direkt in die Augäpfel projizierten elektromagnetischen Wellen reduziert wird.

2. Anti-Gesichtserkennungssystem nach Anspruch 1, **dadurch gekennzeichnet, dass**
die erste Projektionsvorrichtung dazu ausgelegt ist, störende elektromagnetische Wellen mit variabler Intensität auf das menschliche Gesicht zu projizieren, und die Steuervorrichtung dazu ausgelegt ist, die Projektionsintensität der störenden elektromagnetischen Wellen auf den Augapfelbereich gemäß der erfassten Augapfelblickrichtung zumindest teilweise zu reduzieren.

3. Anti-Gesichtserkennungssystem nach Anspruch 1 oder 2, **dadurch gekennzeichnet, dass** die störenden elektromagnetischen Wellen dazu ausgelegt sind, Rauschen, insbesondere Zufallsrauschen, auf das menschliche Gesicht aufzubringen, wobei das Rauschen vorzugsweise als Bildrauschen auf ein Gesichtserkennungsbild ausgelegt ist.

4. Anti-Gesichtserkennungssystem nach Anspruch 1 oder 2, **dadurch gekennzeichnet, dass** die erste Projektionsvorrichtung vor dem menschlichen Gesicht angeordnet ist, vorzugsweise die erste Projektionsvorrichtung am Lenkrad und/oder am Armaturenbrett angeordnet ist.

5. Anti-Gesichtserkennungssystem nach Anspruch 1 oder 2, **dadurch gekennzeichnet, dass** die Augapfelverfolgungsvorrichtung als fahrzeugmontierte Kamera ausgelegt ist,
vorzugsweise die fahrzeugmontierte Kamera ferner dazu ausgelegt ist, den Ermüdungszustand des menschlichen Gesichts zu erfassen, und die Steuervorrichtung dazu ausgelegt ist, den Ermüdungszustand zu analysieren und die Projektion der störenden elektromagnetischen Wellen auf das menschliche Gesicht gemäß dem analysierten Ermüdungszustand anzupassen, und
vorzugsweise, wenn die Steuervorrichtung erkennt, dass sich das menschliche Gesicht in einem Ermüdungszustand befindet, die Steuervorrichtung dazu ausgelegt ist, eine Warnanzeige auszugeben, um die Projektion der störenden elektromagnetischen Welle auf das menschliche Gesicht, insbesondere die Projektion auf die Augäpfel, zu verstärken.

6. Anti-Gesichtserkennungssystem nach Anspruch 1 oder 2, **dadurch gekennzeichnet, dass** das Anti-Gesichtserkennungssystem ferner eine zweite Projektionsvorrichtung umfasst, die dazu ausgelegt ist, eine verdeckende Projektionsfläche zu erzeugen, um das menschliche Gesicht zumindest teilweise zu verdecken, um eine Gesichtserkennung zu behindern,
vorzugsweise die zweite Projektionsvorrichtung als holografisches Projektionsmodul ausgelegt ist, das zur Erzeugung einer holografischen Projektion ausgelegt ist, und
vorzugsweise die zweite Projektionsvorrichtung einen ersten Projektor und einen zweiten Projektor enthält, die auf dem Dach des Fahrzeugs installiert und dazu ausgelegt sind, eine dreidimensionale Projektionsfläche zu erzeugen.

7. Anti-Gesichtserkennungssystem nach Anspruch 1 oder 2, **dadurch gekennzeichnet, dass** das Anti-Gesichtserkennungssystem ferner ein Fahrzeugpositionsbestimmungsmodul zum Bereitstellen der aktuellen Position des Fahrzeugs und ein Verkehrsinformationsmodul zum Bereitstellen der Position einer öffentlichen Kamera, wie z. B. der Position einer Verkehrskamera, umfasst,
vorzugsweise die Steuervorrichtung dazu ausgelegt ist, die Projektion der störenden elektromagnetischen Wellen auf das menschliche Gesicht gemäß der aktuellen Position des Fahrzeugs und der Position der öffentlichen Kamera zu steuern;
vorzugsweise die Steuervorrichtung dazu ausgelegt ist, den Betrieb der ersten Projektionsvorrichtung gemäß einschlägigen Vorschriften zu steuern, wobei
wenn die einschlägigen Vorschriften einen Anti-Erkennungsvorgang gegen eine öffentliche Kamera nicht zulassen, die Steuervorrichtung dazu ausgelegt ist, eine erste Aussetzungsanweisung auszugeben, um die erste Projektionsvorrichtung daran zu hindern, die störenden elektromagnetischen Wellen auf das menschliche Gesicht zu projizieren, wenn die aktuelle Position des Fahrzeugs innerhalb eines vorbestimmten Bereichs der Position der öffentlichen Kamera liegt, und
die Steuervorrichtung dazu ausgelegt ist, eine ersten Aktivierungsanweisung zum Aktivieren der ersten Projektionsvorrichtung auszugeben, um die störenden elektromagnetischen Wellen auf das menschliche Gesicht zu projizieren, wenn die aktuelle Position des Fahrzeugs außerhalb des vorbestimmten Bereichs der Position der öffentlichen Kamera liegt.

8. Anti-Gesichtserkennungssystem nach Anspruch 6, **dadurch gekennzeichnet, dass** das Anti-Gesichtserkennungssystem ferner ein Fahrzeugpositionsbestimmungsmodul zum Bereitstellen der aktuellen Position des Fahrzeugs und ein Verkehrsinformationsmodul zum Bereitstellen der Position einer öffentlichen Kamera umfasst, wobei die Steuervorrichtung dazu ausgelegt ist, die Erzeugung der verdeckenden Projektionsfläche gemäß der aktuellen Position des Fahrzeugs und der Position der öffentlichen Kamera zu steuern,
vorzugsweise die Steuervorrichtung dazu ausgelegt ist, den Betrieb der zweiten Projektionsvorrichtung gemäß den einschlägigen Vorschriften zu steuern, wobei, wenn die einschlägigen Vorschriften einen Anti-Erkennungsvorgang gegenüber einer öffentlichen Kamera nicht zulassen, die Steuervorrichtung dazu ausgelegt ist, eine zweite Aussetzungsanweisung auszugeben, um die zweite Projektionsvorrichtung an der Erzeugung der verdeckenden Projektionsfläche zu hindern, wenn die aktuelle Position des Fahrzeugs innerhalb eines vorbestimmten Bereichs der Position der öffentlichen Kamera liegt, und
die Steuervorrichtung dazu ausgelegt ist, eine zweite Aktivierungsanweisung auszugeben, um die zweite Projektionsvorrichtung zu aktivieren , die verdeckende Projektionsfläche zu erzeugen, wenn die aktuelle Position des Fahrzeugs außerhalb des vorbestimmten Bereichs der Position der öffentlichen Kamera liegt.

9. Anti-Gesichtserkennungsverfahren für Fahrzeuge, wobei das Anti-Gesichtserkennungssystem für Fahrzeuge dazu ausgelegt ist, das Risiko von Fahrzeugbenutzern zu verringern, durch eine Kamera in einer Außenumgebung an ihren Gesichtsdaten erkannt werden, wobei das Anti-Gesichtserkennungsverfahren umfasst:
Projizieren von störenden elektromagnetische Wellen auf ein menschliches Gesicht, wobei die störenden elektromagnetischen Wellen einen Störeffekt auf die Erkennung des menschlichen Gesichts aufweisen;
Erfassen einer Augapfelblickrichtung;
Anpassen der Projektion der störenden elektromagnetischen Wellen auf das menschliche Gesicht gemäß der erfassten Augapfelblickrichtung; und
Anpassen der Projektionsrichtung der störenden elektromagnetischen Wellen auf das menschliche Gesicht gemäß der erfassten Augapfelblickrichtung, um zu bewirken, dass sich die störenden elektromagnetischen Wellen drehen und/oder bewegen, sodass eine Mittelachse der elektromagnetischen Wellen weiter von den Augapfelbereichen wegbewegt wird, wodurch die Menge der direkt in die Augäpfel projizierten elektromagnetischen Wellen verringert wird.

10. Anti-Gesichtserkennungsverfahren nach Anspruch 9, **dadurch gekennzeichnet, dass** das Anpassen der Projektion der störenden elektromagnetischen Wellen auf das menschliche Gesicht gemäß der erfassten Augapfelblickrichtung umfasst:
zumindest teilweises Reduzieren der Projektionsintensität der störenden elektromagnetischen Wellen auf den Augapfelbereich gemäß der erfassten Augapfelblickrichtung.

11. Anti-Gesichtserkennungsverfahren nach Anspruch 9 oder 10, **dadurch gekennzeichnet, dass** das Anti-Gesichtserkennungsverfahren ferner umfasst:
Erfassen des Ermüdungszustands des menschlichen Gesichts; und
Anpassen der Projektion der störenden elektromagnetischen Wellen auf das menschliche Gesicht gemäß dem Ermüdungszustand, und vorzugsweise, wenn der Ermüdungszustand des menschlichen Gesichts erkannt wird, Erhöhen der Projektionsintensität der störenden elektromagnetischen Welle auf das menschliche Gesicht, insbesondere der Projektion auf die Augäpfel.

12. Anti-Gesichtserkennungsverfahren nach Anspruch 9 oder 10, **dadurch gekennzeichnet, dass** das Anti-Gesichtserkennungsverfahren ferner umfasst:
Erzeugen einer verdeckenden Projektionsfläche, vorzugsweise einer holografischen Projektionsfläche, um das menschliche Gesicht zumindest teilweise zu verdecken und eine Gesichtserkennung zu behindern.

13. Anti-Gesichtserkennungsverfahren nach Anspruch 9 oder 10, **dadurch gekennzeichnet, dass** das Anti-Gesichtserkennungsverfahren ferner umfasst:
Erfassen der aktuellen Position des Fahrzeugs;
Erfassen der Position einer öffentlichen Kamera, z. B. einer Verkehrskamera;
Steuern der Projektion der störenden elektromagnetischen Wellen auf das menschliche Gesicht gemäß der aktuellen Position des Fahrzeugs und der Position der öffentlichen Kamera, wobei vorzugsweise einschlägige Vorschriften ermittelt werden, und wenn die einschlägigen Vorschriften einen Anti-Erkennungsvorgang gegen eine öffentliche Kamera nicht zulassen, die Entfernung zwischen der aktuellen Position des Fahrzeugs und der Position der öffentlichen Kamera bestimmt wird, und wenn die aktuelle Position des Fahrzeugs in einem vorbestimmten Bereich der Position der öffentlichen Kamera liegt, die erste Projektionsvorrichtung daran gehindert wird, die störenden elektromagnetischen Wellen auf das menschliche Gesicht zu projizieren, und wenn die aktuelle Position des Fahrzeugs außerhalb des vorbestimmten Bereichs der Position der öffentlichen Kamera liegt, die erste Projektionsvorrichtung aktiviert wird, um die störenden elektromagnetischen Wellen auf das menschliche Gesicht zu projizieren.

14. Anti-Gesichtserkennungsverfahren nach Anspruch 12, **dadurch gekennzeichnet, dass** das Anti-Gesichtserkennungsverfahren ferner umfasst:
Erfassen der aktuellen Position des Fahrzeugs;
Erfassen der Position einer öffentlichen Kamera, z. B. einer Verkehrskamera;
Steuern der Erzeugung der verdeckenden Projektionsfläche gemäß der aktuellen Position des Fahrzeugs und der Position der öffentlichen Kamera, wobei vorzugsweise einschlägige Vorschriften ermittelt werden, und wenn die einschlägigen Vorschriften einen Anti-Erkennungsvorgang gegen eine öffentliche Kamera nicht zulassen, die Entfernung zwischen der aktuellen Position des Fahrzeugs und der Position der öffentlichen Kamera bestimmt wird, und wenn die aktuelle Position des Fahrzeugs innerhalb eines vorbestimmten Bereichs der Position der öffentlichen Kamera liegt, die zweite Projektionsvorrichtung daran gehindert wird, die verdeckende Projektionsfläche zu erzeugen, und wenn die aktuelle Position des Fahrzeugs außerhalb des vorbestimmten Bereichs der Position der öffentlichen Kamera liegt, die zweite Projektionsvorrichtung aktiviert wird, um die verdeckende Projektionsfläche zu erzeugen.

15. Fahrzeug, das das Anti-Gesichtserkennungssystem nach einem der Ansprüche 1 bis 8 umfasst.

## Revendications

1. Système anti-reconnaissance faciale pour véhicules, le système anti-reconnaissance faciale pour véhicules étant configuré pour réduire le risque de reconnaissance d'utilisateurs de véhicules par une caméra dans un environnement externe de par leurs données faciales propres, le système anti-reconnaissance faciale comprenant :
un premier dispositif de projection qui est configuré pour projeter des ondes électromagnétiques perturbatrices vers un visage humain, les ondes électromagnétiques perturbatrices ayant un effet perturbateur sur la reconnaissance du visage humain ;
un dispositif de suivi oculaire qui est configuré pour détecter une direction du regard oculaire ; et
un dispositif de commande qui est connecté en communication au dispositif de suivi oculaire et est configuré pour acquérir la direction du regard oculaire auprès du dispositif de suivi oculaire, le dispositif de commande étant connecté en communication au premier dispositif de projection et étant configuré pour ajuster la projection des ondes électromagnétiques perturbatrices vers le visage humain selon la direction du regard oculaire acquise, le premier dispositif de projection étant configuré pour projeter des ondes électromagnétiques perturbatrices rotatives et/ou déplaçables vers le visage humain, et le dispositif de commande étant configuré pour ajuster la direction de projection des ondes électromagnétiques perturbatrices vers le visage humain selon la direction du regard oculaire acquise de manière à provoquer une rotation et/ou un déplacement des ondes électromagnétiques perturbatrices, de sorte à éloigner un axe central des ondes électromagnétiques de zones des globes oculaires, pour ainsi réduire la quantité d'ondes électromagnétiques projetées directement dans les globes oculaires.

2. Système anti-reconnaissance faciale selon la revendication 1, **caractérisé en ce que**
le premier dispositif de projection est configuré pour projeter des ondes électromagnétiques perturbatrices d'intensité variable vers le visage humain, et le dispositif de commande est configuré pour réduire au moins partiellement l'intensité de projection des ondes électromagnétiques perturbatrices sur la zone des globes oculaires selon la direction du regard oculaire acquise.

3. Système anti-reconnaissance faciale selon la revendication 1 ou 2, **caractérisé en ce que** les ondes électromagnétiques perturbatrices sont configurées pour appliquer un bruit, en particulier un bruit aléatoire, au visage humain, de préférence le bruit est configuré comme un bruit d'image appliqué à une image de reconnaissance faciale.

4. Système anti-reconnaissance faciale selon la revendication 1 ou 2, **caractérisé en ce que** le premier dispositif de projection est agencé devant le visage humain, de préférence le premier dispositif de projection est agencé sur le volant de direction et/ou le tableau de bord.

5. Système anti-reconnaissance faciale selon la revendication 1 ou 2, **caractérisé en ce que** le dispositif de suivi oculaire est configuré comme une caméra embarquée,
de préférence, la caméra embarquée est configurée en outre pour détecter l'état de fatigue du visage humain, et le dispositif de commande est configuré pour analyser l'état de fatigue et ajuster la projection des ondes électromagnétiques perturbatrices vers le visage humain selon l'état de fatigue analysé, et
de préférence, lorsque le dispositif de commande reconnaît que le visage humain est en état de fatigue, le dispositif de commande est configuré pour délivrer une indication d'alerte de manière à renforcer la projection des ondes électromagnétiques perturbatrices vers le visage humain, notamment la projection sur les globes oculaires.

6. Système anti-reconnaissance faciale selon la revendication 1 ou 2, le système anti-reconnaissance faciale étant **caractérisé en ce qu'**il comprend en outre un deuxième dispositif de projection qui est configuré pour générer une surface de projection couvrante de manière à couvrir au moins partiellement le visage humain pour entraver une reconnaissance faciale,
de préférence, le deuxième dispositif de projection est configuré comme un module de projection holographique qui est configuré pour générer une projection holographique, et
de préférence, le deuxième dispositif de projection comporte un premier projecteur et un deuxième projecteur qui sont installés sur le toit du véhicule et configurés pour générer une surface de projection tridimensionnelle.

7. Système anti-reconnaissance faciale selon la revendication 1 ou 2, le système anti-reconnaissance faciale étant **caractérisé en ce qu'**il comprend en outre un module de localisation de véhicule pour fournir la position actuelle du véhicule et un module d'informations routières pour fournir la position d'une caméra municipale, notamment la position d'une caméra routière, de préférence, le dispositif de commande est configuré pour commander la projection des ondes électromagnétiques perturbatrices vers le visage humain selon la position actuelle du véhicule et la position de la caméra municipale ;
de préférence, le dispositif de commande est configuré pour commander le fonctionnement du premier dispositif de projection selon des réglementations associées,
si les réglementations associées ne permettent pas un processus anti-reconnaissance vis-à-vis d'une caméra municipale, alors, lorsque la position actuelle du véhicule s'inscrit dans un rayon prédéterminé de la position de la caméra municipale, le dispositif de commande étant configuré pour délivrer une première instruction de suspension pour suspendre la projection, par le premier dispositif de projection, des ondes électromagnétiques perturbatrices vers le visage humain, et
lorsque la position actuelle du véhicule sort du rayon prédéterminé de la position de la caméra municipale, le dispositif de commande étant configuré pour délivrer une première instruction d'activation pour activer la projection, par le premier dispositif de projection, des ondes électromagnétiques perturbatrices vers le visage humain.

8. Système anti-reconnaissance faciale selon la revendication 6, le système anti-reconnaissance faciale étant **caractérisé en ce qu'**il comprend en outre un module de localisation de véhicule pour fournir la position actuelle du véhicule et un module d'informations routières pour fournir la position d'une caméra municipale, le dispositif de commande étant configuré pour commander la génération de la surface de projection couvrante selon la position actuelle du véhicule et la position de la caméra municipale,
de préférence, le dispositif de commande est configuré pour commander le fonctionnement du deuxième dispositif de projection selon des réglementations associées ; si les réglementations associées ne permettent pas un processus anti-reconnaissance vis-à-vis d'une caméra municipale, alors, lorsque la position actuelle du véhicule s'inscrit dans un rayon prédéterminé de la position de la caméra municipale, le dispositif de commande étant configuré pour délivrer une deuxième instruction de suspension pour suspendre la génération, par le deuxième dispositif de projection, de la surface de projection couvrante, et
lorsque la position actuelle du véhicule sort du rayon prédéterminé de la position de la caméra municipale, le dispositif de commande étant configuré pour délivrer une deuxième instruction d'activation pour activer la génération, par le deuxième dispositif de projection, de la surface de projection couvrante.

9. Procédé anti-reconnaissance faciale pour véhicules, le procédé anti-reconnaissance faciale pour véhicules étant configuré pour réduire le risque de reconnaissance d'utilisateurs de véhicules par une caméra dans un environnement externe de par leurs données faciales propres, le procédé anti-reconnaissance faciale comprenant :
la projection d'ondes électromagnétiques perturbatrices vers un visage humain, les ondes électromagnétiques perturbatrices ayant un effet perturbateur sur la reconnaissance du visage humain ;
l'acquisition d'une direction du regard oculaire ;
l'ajustement de la projection des ondes électromagnétiques perturbatrices vers le visage humain selon la direction du regard oculaire acquise ; et
l'ajustement de la direction de projection des ondes électromagnétiques perturbatrices vers le visage humain selon la direction du regard oculaire acquise de manière à provoquer une rotation et/ou un déplacement des ondes électromagnétiques perturbatrices, de sorte à éloigner un axe central des ondes électromagnétiques de zones des globes oculaires, pour ainsi réduire la quantité d'ondes électromagnétiques projetées directement dans les globes oculaires.

10. Procédé anti-reconnaissance faciale selon la revendication 9, **caractérisé en ce que** l'ajustement de la projection des ondes électromagnétiques perturbatrices vers le visage humain selon la direction du regard oculaire acquise comprend :
la réduction au moins partielle de l'intensité de projection des ondes électromagnétiques perturbatrices sur la zone des globes oculaires selon la direction du regard oculaire acquise.

11. Procédé anti-reconnaissance faciale selon la revendication 9 ou 10, le procédé anti-reconnaissance faciale étant **caractérisé en ce qu'**il comprend en outre :
la détection de l'état de fatigue du visage humain ; et
l'ajustement de la projection des ondes électromagnétiques perturbatrices vers le visage humain selon l'état de fatigue et, de préférence, en cas de reconnaissance de l'état de fatigue du visage humain, le renforcement de l'intensité de projection des ondes électromagnétiques perturbatrices vers le visage humain, notamment la projection sur les globes oculaires.

12. Procédé anti-reconnaissance faciale selon la revendication 9 ou 10, le procédé anti-reconnaissance faciale étant **caractérisé en ce qu'**il comprend en outre :
la génération d'une surface de projection couvrante, de préférence une surface de projection holographique, de manière à couvrir au moins partiellement le visage humain pour entraver une reconnaissance faciale.

13. Procédé anti-reconnaissance faciale selon la revendication 9 ou 10, le procédé anti-reconnaissance faciale étant **caractérisé en ce qu'**il comprend en outre :
l'acquisition de la position actuelle du véhicule ;
l'acquisition de la position d'une caméra municipale, notamment une caméra routière ;
la commande de la projection des ondes électromagnétiques perturbatrices vers le visage humain selon la position actuelle du véhicule et la position de la caméra municipale ; de préférence, des réglementations associées étant identifiées et, si les réglementations associées ne permettent pas un processus anti-reconnaissance vis-à-vis d'une caméra municipale, la distance entre la position actuelle du véhicule et la position de la caméra municipale étant déterminée, lorsque la position actuelle du véhicule s'inscrit dans un rayon prédéterminé de la position de la caméra municipale, la projection, par le premier dispositif de projection, des ondes électromagnétiques perturbatrices vers le visage humain est suspendue et, lorsque la position actuelle du véhicule sort du rayon prédéterminé de la position de la caméra municipale, la projection, par le premier dispositif de projection, des ondes électromagnétiques perturbatrices vers le visage humain est activée.

14. Procédé anti-reconnaissance faciale selon la revendication 12, le procédé anti-reconnaissance faciale étant **caractérisé en ce qu'**il comprend en outre :
l'acquisition de la position actuelle du véhicule ;
l'acquisition de la position d'une caméra municipale, notamment une caméra routière ;
la commande de la génération de la surface de projection couvrante selon la position actuelle du véhicule et la position de la caméra municipale ; de préférence, des réglementations associées étant identifiées et, si les réglementations associées ne permettent pas un processus anti-reconnaissance vis-à-vis d'une caméra municipale, la distance entre la position actuelle du véhicule et la position de la caméra municipale étant déterminée, lorsque la position actuelle du véhicule s'inscrit dans un rayon prédéterminé de la position de la caméra municipale, la génération, par le deuxième dispositif de projection, de la surface de projection couvrante est suspendue et, lorsque la position actuelle du véhicule sort du rayon prédéterminé de la position de la caméra municipale, la génération, par le deuxième dispositif de projection, de la surface de projection couvrante est activée.

15. Véhicule, comprenant le système anti-reconnaissance faciale selon l'une quelconque des revendications 1 à 8.
